# EUROPÄISCHE PATENTSCHRIFT

(11) **EP 2 253 406 B1**
(45) Veröffentlichungstag und Bekanntmachung des Hinweises auf die Patenterteilung: **22.02.2012**
(21) Anmeldenummer: 10005063.2
(22) Anmeldetag: 14.05.2010
(51) Int. Cl.: B23F 1/02, B23F 23/00

(54) **Verfahren zur Bearbeitung eines Zahnrades**
Method for processing a cogwheel
Procédé d'usinage d'une roue dentée

(30) Priorität: 15.05.2009 DE 102009021578
(43) Veröffentlichungstag der Anmeldung: 24.11.2010
(73) Patentinhaber: Höfler Maschinenbau GmbH, 76275 Ettlingen (DE)
(72) Erfinder: Geiser, Hansjörg , Dr., 76571 Gagenau-Ottenau (DE); Bister, Gerd, 78727 Oberndorf (DE); Göpper, Dominique, 76189 Karlsruhe (DE); Schweizer, Martin, 76437 Rastatt (DE)
(74) Vertreter: Mischung, Ralf

(56) Entgegenhaltungen:
- DE-C1- 4 224 703
- GB-A- 373 736

## Beschreibung

Die vorliegende Erfindung betrifft ein Verfahren zur Bearbeitung eines Zahnrades mit einem rotierenden Schleifkörper nach dem Oberbegriff des Anspruchs 1.

Zur Ausbildung von Zahnlücken in einem Zahnrad ist aus dem Stand der Technik bereits bekannt, eine rotierende Schleifscheibe im Bereich der geplanten Lücke in das Zahnrad einzubringen, um dort Material abzutragen. Zweckmäßigerweise wird die Schleifscheibe dabei über die ganze Breite des Zahnrades gehoben bzw. abgesenkt. Für die zunächst grobe Schleifbearbeitung (Schruppen) ist weiterhin bekannt, mehrere Zahnlücken gleichzeitig zu schleifen, wobei die Schleifscheibe entsprechend mehrere gleichartige Profile aufweist. Auf diese Weise kann in einer Hubbewegung aus mehreren Lücken gleichzeitig Material abgetragen werden, wodurch mehrere Zahnlücken gleichzeitig auf die anschließend zu erfolgende Feinbearbeitung (Schlichten) vorbereitet werden.

Zum Schlichten wird gemäß Stand der Technik der Schleifkörper soweit verändert, dass lediglich ein Profil zur Feinbearbeitung einer einzigen Zahnlücke verbleibt bzw. Verwendung findet. Zum Zwecke der Schruppbearbeitung eventuell ehemals benachbarte weitere Profile werden dafür entsprechend zurückgenommen, so dass vorzugsweise nur das mittlere Profil des Schleifkörpers die Schlichtbearbeitung vornimmt.

Dieses Verfahren hat den Vorteil, dass für die Schruppbearbeitung durch gleichzeitiges Schleifen mehrerer Zahnlücken Zeit eingespart werden kann. Hingegen erfolgt das Schlichten für jede einzelne Zahnlücke getrennt, und damit zeitaufwändig.

Aus der DE 42 24 703 C1 ist ein Formschleifwerkzeug für die Bearbeitung von Zahnrädern gemäß dem Oberbegriff von Anspruch 1 bekannt. Das Formschleifwerkzeug setzt sich aus mehren Einzelscheiben zusammen, wobei eine zentrische Einzelscheibe die hier zugeordnete Zahnlücke im Vollformverfahren schleift, während die rechts und links benachbarten Einzelscheiben jeweils nur eine der beiden evolventen Zahnflanken berühren. Dadurch soll Schleifbrand an den andernfalls besonders beanspruchten Oberflächen vermieden werden, was jedoch eine ungleichmäßige Abnutzung der Schleifscheiben zur Folge hat.

Aufgabe der vorliegenden Erfindung war es daher, ein Verfahren zur beschleunigten Schleifbearbeitung eines Zahnrades anzubieten.

Die Aufgabe wird gelöst durch ein Verfahren nach Anspruch 1.

Die Erfindung macht sich die Erkenntnis zu eigen, dass ein Schleifkörper zur gleichzeitigen Bearbeitung mehrerer Zahnlücken vorteilhafterweise so profiliert werden kann, dass einzelne Profilabschnitte des Schleifkörpers in unterschiedliche Zahnlücken des Zahnrades eingreifen, wobei sich die Profilabschnitte dabei hinsichtlich ihre relativen Lage zur Schleifkörperachse oder in anderer Form voneinander unterscheiden zu dem Zweck, mit den verschieden geformten Profilabschnitten des Schleifkörpers nacheinander in eine Lücke des Zahnrades einzugreifen, um dadurch dort jeweils zusätzlich Material abzutragen. Gleichzeitig werden benachbarte Lücken durch die am Schleifkörper benachbart zueinander angeordneten Profile bearbeitet, so dass mehrere Lücken gleichzeitig, aber jeweils mit unterschiedlichen Profilen bearbeitet werden können, so dass aus den Zahnlücken unterschiedliche bzw. unterschiedlich in der Zahnlücke angeordnete Zerspanvolumina abgetragen werden.

Der Unterschied der einzelnen Profile zueinander geht dabei über das Maß hinaus, welches auch bei identischen Profilen zur bloßen Berücksichtigung der Krümmung das Zahnrades entlang seines Umfang nötig wäre, wenn alle Lücken gleichartig geschliffen werden sollen. Stattdessen unterscheiden sich die Profile erfindungsgemäß so voneinander, das ein zweites Profil aus einer von ihm bearbeiteten Lücke Material an einer Stelle entfernt, die durch ein davon verschiedenes erstes Profil in der gleichen Lücke nicht erreicht wird, etwa weil das zweite Profil tiefer oder breiter in die Lücke eingreift.

Vorteilhafterweise greifen die einzelnen Profile bei jedem weiteren Hub des Schleifkörpers in jeweils eine andere Zahnlücke des Zahnrades ein, um an den Stellen zusätzliches Material abzutragen, die durch das zuvor in die gleiche Zahnlücke eingreifende Profil nicht erreicht wurde. Zwischen den einzelnen Hüben wird das Zahnrad zweckmäßigerweise weiter gedreht ("weitergeteit") so dass jede Zahnlücke beim nächsten Hub durch das nächst "größere" Profil des Schleifkörpers bearbeitet werden kann. Auf diese Weise wird jede Zahnlücke bei jedem Hub ein Stückchen näher an das Endmaß herangeführt.

Denkbar ist beispielsweise ein Schleifkörper mit fünf am Außenumfang benachbart zueinander ausgebildeten Schleifprofilen, wobei die Profile beispielsweise dadurch voneinander abweichen, dass sie in zunehmendem radialen Abstand von der Drehachse des Schleifkörpers angeordnet sind. Im Bezug auf eine bestimmte Zahnlücke greift zunächst das Profil mit dem kleinsten Durchmesser in den Bereich dieser "ersten" Zahnlücke ein und trägt dort während eines Hubes des Schleifkörpers Material ab. Vor Durchführung des nächsten Hubes wird das Zahnrad um eine Zahnlücke weiter gedreht. Dadurch gelangt die erste Zahnlücke in den Wirkbereich des zweiten Profils mit etwas größerem Durchmesser, so dass in der ersten Zahnlücke im Vergleich zum ersten Hub zusätzliches Material abgetragen wird. Das erste Profil greift bei diesem zweiten Hub zeitgleich in die zweite Zahnlücke ein, um dort wieder Material nach Maßgabe des ersten Profils abzutragen. Vor Durchführung des nächsten Hubs wird das Zahnrad wiederum um eine Zahnlücke weiter gedreht, so dass anschließend das dritte Profil in die erste Zahnlücke eingreift. Aufgrund seines gegenüber dem ersten und zweiten Profil wiederum größeren Durchmessers trägt dieses dritte Profil in der ersten Zahnlücke wiederum zusätzliches Material ab. Zugleich wird die zweite Zahnlücke durch das zweite Profil geschliffen, während das erste Profil mittlerweile in die dritte Zahnlücke eingreift. Bei jedem Hub wird also in jeder bearbeiteten Zahnlücke weiteres Material abgetragen, während sich die einzelnen Zahnlücken - jeweils beabstandet durch einen Bearbeitungshub - derjenigen Größe annähern, die durch das letzte bzw. größte Profil des Schleifkörpers vorgegeben wird.

Sind am Schleifkörper beispielsweise fünf unterschiedliche Profile angeordnet, so erreicht die erste Zahnlücke nach fünf Hüben die durch das fünfte Profil vorgegebene Kontur, bei der es sich vorzugsweise um das gewünschte Endmaß der Zahnlücke handelt. Im nächsten Hub würde die erste Zahnlücke nicht mehr im Eingriff stehen mit dem Schleifkörper, der dann mit seinem ersten Profil bereits in die sechste Zahnlücke eingreift.

Der erfindungsgemäß erzielte Zeitvorteil bei der Bearbeitung wird also dadurch erreicht, dass jede Zahnlücke von jedem der am Schleifkörpers vorgesehenen Profilabschnitte idealerweise genau einmal bearbeitet wird und nach jedem einzelnen Hub weitergeteilt werden kann. Die Schleifzeit reduziert sich dabei je nach Anzahl der gleichzeitig geschliffenen Lücken. Werden n Lücken gleichzeitig geschliffen, so wird nur wenig mehr als etwa ein 1/n der sonst üblichen Schleifzeit benötigt (die Zeit für das Weiterteilen bleibt dagegen unbeeinflusst).

Auch die Zahl der Abrichtvorgänge pro Rundgang, um den Schleifkörper selbst entsprechend zu profilieren, wird in gleicher Weise reduziert, da sich der Materialabtrag auf die einzelnen Profile verteilt und damit das bezogene Zerspanvolumen erst nach einem Vielfachen der entsprechenden Zeit beim Einlückenschleifen erreicht wird. Zwar nimmt die Dauer des Abrichtens durch die breitere Scheibe mit mehreren Profilabschnitten zu, durch die geringere Anzahl der Abrichtvorgänge gibt es aber auch weniger Abricht-Nebenzeiten, so dass die Gesamtzeit für das Abrichten sogar geringer wird.

Das erfindungsgemäße Verfahren sieht demnach die Bearbeitung eines Zahnrades mit einem Schleifkörper vor, wobei das Zahnrad um eine Zahnradachse ausgebildet ist und der Schleifkörper um eine Schleifachse rotiert. Der Schleifkörper bearbeitet die Zahnlücken des Zahnrades, indem er in mehreren Bearbeitungshüben über die Breite des Zahnrades an diesen entlang bewegt wird, wobei der Schleifkörper zur gleichzeitigen Bearbeitung von wenigstens zwei Lücken ein Bearbeitungsprofil mit wenigstens zwei Profilabschnitten aufweist. Erfindungsgemäß weicht das Profil wenigstens zweier Profilabschnitte dabei voneinander ab, um wenigstens zwei in einem Bearbeitungshub bearbeitete Lücken entsprechend dieser Abweichung unterschiedlich, aber gleichzeitig zu profilieren. Ein wesentlicher Aspekt der Erfindung liegt also in der gleichzeitigen Bearbeitung mehrerer Zahnlücken mit bewusst unterschiedlich gewählten Profilen und hieraus resultierenden unterschiedlichen Abträgen bzw. Zerspanvolumina.

Im Hinblick auf eine Zahnlücke erfolgt deren Bearbeitung in einem ersten Bearbeitungshub entsprechend eines bestimmten Profilabschnittes, wonach das Zahnrad anschließend so gedreht wird, dass die Zahnlücke im nächsten Bearbeitungshub mit einem weiteren Profilabschnitt bearbeitet wird, dessen Profil sich von demjenigen unterscheidet, mit dem die Lücke im vorausgehenden Bearbeitungshub bearbeitet wurde.

In Fortführung dieses Gedankens sieht eine erfindungsgemäße Ausführungsform des Verfahrens vor, in einem Bearbeitungshub H₁ die Zahnlücken L₁, L₂, L₃... Lₙ entsprechend der Profilabschnitte P₁, P₂, P₃...Pₘₐₓ gleichzeitig zu schleifen und das Zahnrad anschließend zu drehen. Die Drehung des Zahnrades erfolgt zweckmäßigerweise so, dass ein Teil der Zahnlücken, L₁, L₂, L₃...Lₙ im nächsten Bearbeitungshub H₂ entsprechend der Profilabschnitte P₂, P₃, P₄...Pₘₐₓ bearbeitet wird, wobei sich die Profile wenigstens zweier Profilabschnitte P₁, P₂, P₃, P₄,..Pₘₐₓ voneinander unterscheiden. Zweckmäßigerweise wird dabei bei jedem Bearbeitungshub aus jeder dabei bearbeiteten Zahnlücke weiteres Material abgetragen.

Der durch die unterschiedlichen Profilabschnitte erzeugte erfindungsgemäße Vorteil des Verfahrens wird nach einer vorteilhaften Ausführungsform der Erfindung dadurch weiterverbessert, dass der Abstand zwischen der Achse des Schleifkörpers und der Zahnradachse zwischen zwei unmittelbar aufeinanderfolgenden Bearbeitungshüben konstant gehalten wird. Die unterschiedlichen Profile am Schleifkörper gestatten - wie bereits beschrieben wurde - die sukzessive Veränderung bzw. Anpassung der Zahnlücken an das gewünschte Sollprofil durch einfaches Weiterteilen des Zahnrades zwischen den einzelnen Hüben. Da die "Zustellung" des die Zahnlücke schleifenden Profils in Richtung auf die Zahnradachse durch den beispielsweise zunehmenden radialen Abstand des jeweiligen Profilabschnitts zur Schleifkörperachse realisiert wird ist eine radiale Zustellung des Schleifkörpers selber in Richtung auf die Zahnradachse zwischen den Hüben nicht zwingend erforderlich. Somit können unter Beibehaltung eines konstanten Abstands zwischen Schleifkörperachse und Zahnradachse die einzelnen Profilabschnitte des Schleifkörpers nacheinander in die Zahnlücken eingreifen, um die Lücken auf Sollmaß zu bringen.

Unter Sollmaß oder Sollprofil soll hierbei ein definiertes Maß verstanden sein, welches im Anschluss an ein Bearbeitungsverfahren erzielt sein soll. Dabei kann es sich im Hinblick auf die endgültig gewünschte Form des Werkstückes aber auch um ein "Zwischenmaß" handeln, welches durch weitere Bearbeitungsschritte wieder verändert wird. Denkbar ist insbesondere die mehrfache Durchführung des hier beschriebenen Verfahrens. Dabei würde bspw. zunächst nach einem Rundgang für alle Lücken ein erstes Zwischenmaß erreicht. Anschließend könnte eine Zustellung des Schleifkörpers zur Werkstückachse hin erfolgen, um sodann in einem weiteren Rundgang erfindungsgemäß zu schleifen zur Erzielung eines anderen Zwischenmaßes oder des endgültigen Maßes.

Der Begriff "Bearbeitungshub" ist in dieser Patentanmeldung zu verstehen in Bezug auf eine Zahnlücke, die während eines Hubs des Schleifkörpers bearbeitet, also geschliffen wird.

Eine zweckmäßige Anordnung der einzelnen Profilabschnitte des Schleifkörpers ergibt sich aus der vorstehenden Beschreibung in dem Sinne, dass die einzelnen Profilabschnitte in einer Richtung parallel zur Schleifachse so hintereinander angeordnet werden, dass das jeweils nachfolgende Profil Material aus einem Bereich der Zahnlücke abträgt, den ein vorausgehendes Profil nicht erreicht. Durch Weiterteilen des Zahnrades zwischen den einzelnen Hüben gelangt dann jeweils das nachfolgende, tiefer oder breiter eingreifende Profil in die Lücke, um zusätzliches Material zu entfernen. Zweckmäßigerweise unterscheiden sich alle auf dem Schleifkörper vorhandenen Profilabschnitte voneinander, so dass jeder Profilabschnitt zusätzliches Material aus der Zahnlücke abträgt im Vergleich zum vorherigen Profil.

Denkbar ist allerdings auch die Anordnung von mehreren Gruppen von Profilabschnitten nebeneinander, wobei die Profilabschnitte innerhalb einer Gruppe gleichartig ausgebildet sind, während sich die Profilabschnitte benachbarter Gruppen voneinander unterscheiden. In diesem Fall lassen sich mehrere Zahnlücken jeweils gleichzeitig auf das gleiche Profil schleifen (durch die Profilabschnitte innerhalb einer Gruppe). Durch anschließendes Weiterteilen des Zahnrades gelangen die dann bearbeiteten Zahnlücken in den Wirkbereich der benachbarten Gruppe von Profilabschnitten, die aus den Zahnlücken zusätzliches Material entfernen können. Entsprechend der Anzahl der gleichartigen Profilabschnitte innerhalb einer Gruppe erfolgt die Weiterteilung zwischen den Hüben um die gleiche Anzahl Zahnlücken. So könnte ein Schleifkörper etwa aus drei Gruppen zu je zwei Profilabschnitten ausgebildet sein. Die Profilabschnitte innerhalb einer Gruppe sind gleichartig ausgebildet und zweckmäßigerweise, aber nicht zwingend, unmittelbar zueinander benachbart. Eine an die erste Gruppe anschließende zweite Gruppe umfasst ebenfalls zwei Profilabschnitte, deren radialer Abstand zur Schleifkörperachse etwas größer gewählt ist, so dass diese tiefer in die Zahnlücke eingreifen. Die wiederum daran benachbarte dritte Gruppe können zwei gleichartige Profilabschnitte aufweisen, die noch weiter in die Zahnlücken eingreifen und beispielsweise auf Endmaß schleifen. Zwischen jedem Hub müsste das Zahnrad dann um zwei Zahnlücken weiter gedreht werden, um eine zuvor bearbeitete Zahnlücke mit einem veränderten neuen Profil zu schleifen. Daraus folgt, dass bei mehreren gleichartigen Profilabschnitten die Bearbeitung des Zahnrades schneller erfolgen kann, da um die entsprechende Anzahl von Lücken zwischen jedem Hub weiter geteilt werden kann.

Der Grundgedanke der Erfindung liegt - wie bereits erwähnt - darin, eine Zahnlücke aufeinanderfolgend mit unterschiedlichen Profilen eines Schleifkörpers zu bearbeiten, um die Lücke schrittweise an das Sollmaß heranzuführen, ohne dass der Schleifkörper dafür umgebaut bzw. verändert werden müsste (abgesehen von evtl. nötigen Abrichtvorgängen). Entsprechend ist derjenige Profilabschnitt, der im Verfahrensablauf als letzter in eine bestimmte Zahnlücke eingreift, so ausgeformt, dass die Zahnlücke mit Hilfe dieses Profils ihr Sollmaß erreicht.

Um den Verschleiß des Schleifkörper vorteilhaft zu minimieren sieht das erfindungsgemäße Verfahren vor, dass einige oder alle Profilabschnitte so geformt werden, dass sie während eines Hubes den gesamten Abschnitt der Flanken der Zahnlücke schleifend bearbeiten, der zwischen dem Außendurchmesser des Profilabschnitts und dem geplanten Kopfkreisdurchmesser (bei Außenverzahnung) bzw. Fußkreisdurchmesser (bei Innenverzahnung) des Zahnrades liegt. Auf diese Weise greift insbesondere auch dasjenige Profil bereits über einen Großteil seiner wirksamen Außenkontur in die Lücke schleifend ein, welches als erstes eine zu bearbeitende Lücke erreichen. Aufgrund der Zahnlückenkontur würde dieses "erste" Profile andernfalls evtl. nur im Bereich seines Profilaußendurchmessers schleifen, und erst die "weiteren" Profile griffen allmählich über ihre gesamten Außenkontur in die Lücke ein. Die hier angeregte optimierte Profilformung verteilt den Verschleiß dagegen annähernd gleichmäßig auf die einzelnen Profilabschnitte des Schleifkörpers und vereinfacht und verkürzt so die Bearbeitung.

Das erfindungsgemäße Verfahren gestattet es auch, das Schruppen und Schlichten in einem Rundgang durchzuführen. Innerhalb einer vollständigen Umdrehung des Zahnrades kann - bei geeigneter Profilgebung am Schleifkörper- jede Lücke zunächst grob bearbeitet und spätestens mit dem letzten Bearbeitungshub geschlichtet und auf Sollmaß gebracht werden. Dazu können beim Abrichten des Schleifkörpers die einzelnen Profile mit unterschiedlichen Rauhigkeiten versehen werden, indem während des Abrichtvorganges der Überdeckungsgrad und/oder das Drehzahlverhältnis geändert wird.

Die vorstehenden Betrachtungen waren insbesondere für den Fall aufgestellt worden, dass die einzelnen Profilabschnitte in radialer Richtung (aus Sicht der Zahnradachse) unterschiedlich tief in die Lücken des Zahnrades eingreifen. Gleichermaßen von dem erfinderischen Gedanken erfasst ist jedoch auch der Fall, dass die einzelnen Profile im Wesentlichen jeweils gleich tief in die Lücken eingreifen, sich jedoch in der Breite (also in Richtung parallel zur Schleifkörperachse) unterschiedlich weit ausdehnen. In diesem Fall würden die unterschiedlichen Profilabschnitte in den Zahnlücken hauptsächlich in Umfangsrichtung des Zahnrades Material entfernen, während der radiale Abstand des Zahnfußes jeder Lücke zur Zahnradachse unverändert bliebe. Selbstverständlich sind auch Mischformen dieser beiden Profilgebungen denkbar, so dass einzelne Profilabschnitte die Zahnlücke in Umfangsrichtung vergrößern, während andere Profilabschnitte bis in den Grund der Zahnlücke hineinreichen und bei der Schleifbearbeitung auch den Fußkreisdurchmesser der Zahnlücke verändern.

Im Rahmen der Erfindung lässt sich die Profilgebung des Schleifkörpers für jeden einzelnen Profilabschnitt beliebig vorgeben, um die Schleifbearbeitung der Zahnlücke durch das jeweilige Profil vorzunehmen.

Der Schleifkörper kann aus einzelnen Schleifscheiben zusammengesetzt werden, wobei jede Schleifscheibe an ihrem äußeren Umfang einen speziellen Profilabschnitt aufweist. Die einzelnen Scheiben können zu einem Paket zusammengesetzt werden, welches den Schleifkörper bildet. Denkbar ist alternativ auch ein einstückiger, alle Profilabschnitte umfassender Schleifkörper. Schließlich könnte auch ein Schleifkörper mit mehreren Profilabschnitten ergänzt werden um weitere separate Schleifscheiben mit jeweils einem Profilabschnitt, so dass ein Gesamtpaket entsteht, mit dem die erfindungsgemäße Schleifbearbeitung dann durchführbar ist.

Das erfindungsgemäße Verfahren lässt sich zum Innenschleifen ebenso vorteilhaft anwenden wie für das Schleifen von Außenverzahnungen.

Weitere vorteilhafte Ausführungsformen ergeben sich aus den Unteransprüchen.

Nachfolgend soll die Durchführung des Verfahrens anhand einiger Figurenbeispiele näher erläutert werden. Dabei zeigen
- Fig. 1: eine Schleifbearbeitung nach dem Stand der Technik,
- Fig. 2: eine Schleifbearbeitung nach einer Ausführungsform der vorliegenden Erfindung,
- Fig. 3: eine abgewandelte erfindungsgemäße Schleifbearbeitung und
- Fig. 4: eine Schleifbearbeitung mit mehreren gleichartigen Profilab- schnitten.

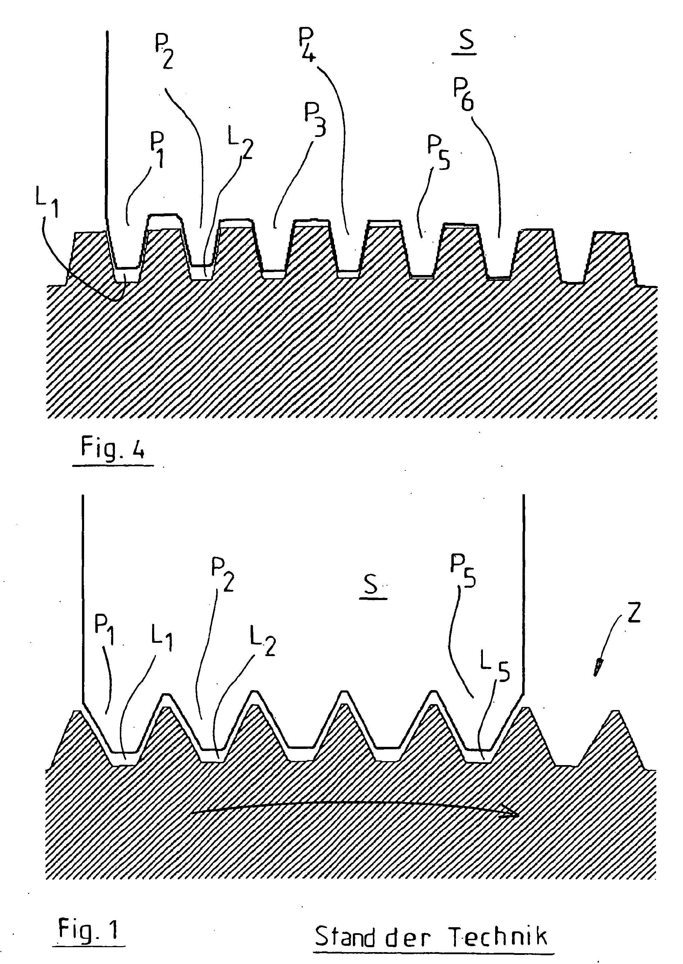

In Fig. 1 ist in schematischer Schnittdarstellung eine Schleifbearbeitung nach dem Stand der Technik dargestellt. Ein im Profil dargestellter Schleifkörper S greift dabei mit gleichartigen Profilabschnitten P₁, P₂...P₅ gleichzeitig in mehrere Zahnlücken eines Zahnrades Z ein. Die Schleifscheibe rotiert um ihre Schleifachse Aₛ. Das Zahnrad ist um seine spätere Drehachse A_{z} drehbar gelagert und kann so "weiter geteilt" werden, wobei die Achse A_{z} hier die Zeichenebene lotrecht durchdringt.

Das aus dem Stand der Technik bekannte Verfahren sieht vor, die rotierende Schleifscheibe parallel zur Zahnradachse A_{z} in Hüben über die Breite des Zahnrades Z auf und ab zu bewegen (also lotrecht zur Zeichenebene). Dabei wird Material aus den einzelnen Lücken L₁, L₂, L₃... des Zahnrades entfernt. Nach jedem Hub kann das Zahnrad um die Anzahl der Profilabschnitte des Schleifkörpers weiter geteilt werden, so dass der Schleifkörper anschließend in neue Zahnlücken eingreift, um diesen das gleiche Profil wie den zuvor bearbeiteten Zahnlücken zu geben. Nach einem Rundgang (einer vollständigen Umdrehung des Zahnrades) kann der radiale Abstand zwischen Schteifscheibenachse A₃ und Zahnradachse A_{z} reduziert werden, um im nächsten Rundlauf jeweils tiefer in die Zahnlücken einzugreifen. Alternativ könnte die Schleifscheibe dem Zahnrad auch nach jedem Hub zunächst weiter zugestellt werden, wobei die Weiterteilung dann erst nach vollständiger Bearbeitung der jeweils von der Scheibe erfassten Lücken erfolgt. Beide Verfahren sind zeitaufwändig und umständlich.

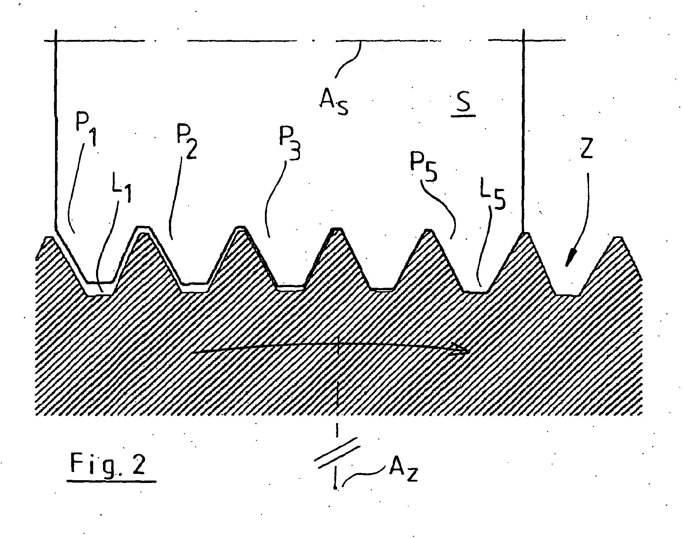

Das erfindungsgemäße Verfahren ist in Fig. 2 anschaulich dargestellt. Wieder ist ein Ausschnitt eines zu bearbeitenden Zahnrades Z im Profil dargestellt. Ein Schleifkörper S weist an seinem äußeren Umfang mehrere Profilabschnitte P₁, P₂, P₃...P₅ auf. Im Gegensatz zum Stand der Technik unterscheiden sich die einzelnen Profile jeweils voneinander in der Art, dass das jeweils nachfolgende Profil aus einer zuvor bearbeiteten Zahnlücke zusätzlich Material entfernt. Das letzte Profil P₅ kann aufgrund der Gesamtzahl der einzelnen Profilabschnitte auch als Pₘₐₓ bezeichnet werden. Es greift weiter oder tiefer in die Zahnlücken ein als alle vorausgehenden Profile P₁ bis P₄ und schleift die jeweils von ihm bearbeitete Zahnlücke auf das Sollmaß bzw. auf ein definiertes Zwischenmaß.

Die erfindungsgemäße Schleifbearbeitung erfolgt so, dass das Zahnrad Z nach jedem Hub um eine Zahnlücke im Uhrzeigersinn weiter geteilt wird. Das führt dazu, dass beispielsweise der Profilabschnitt P₃, der zuvor in die Zahnlücke L₃ eingriff, im nächsten Hub in die Zahnlücke L₂ eingreift. Die Zahnlücke L₂ war zuvor durch den Profilabschnitt P₂ bearbeitet worden, wobei Material entsprechend der Profilgebung des Profilabschnitts P₂ aus der Zahnlücke L₂ abgetragen wurde. Der Profilabschnitt P₃ ragt in radialer Richtung weiter in die Zahnlücken hinein als der Profilabschnitt P₂. Entsprechend wird der Profilabschnitt P₃ nach Weiterteilung des Zahnrades Z um eine Lücke nun aus der Zahnlücke L₂ zusätzliches Material abtragen an den Stellen, die das Profil P₂ dort nicht erreicht hatte.

Diese Betrachtung gilt für alle während eines Hubes bearbeitete Zahnlücken. Bei jedem Hub greift das der jeweiligen Zahnlücke neu zugeordnete Profil tiefer oder breiter in die Zahnlücke ein. Dadurch werden alle bearbeiteten Zahnlücken gleichzeitig, jedoch unterschiedlich weit bearbeitet und so schrittweise auf das Sollmaß vorbereitet. Der letzte Profilabschnitt P₅ schleift die jeweils von ihm bearbeitete Lücke auf das gewünschte Sollmaß (bzw. Zwischenmaß), so dass nach Weiterteilung die zuvor von dem Profilabschnitt P₅ bearbeitete Zahnlücke außer Eingriff zum Schleifkörper S gelangt. Stattdessen greift dann am gegenüberliegenden Ende des Schleifkörperprofils der Profilabschnitt P₁ erstmalig in eine Zahnlücke ein, die anschließend schrittweise der weiteren Bearbeitung durch die einzelnen Profilabschnitte P₂ bis P₅ unterworfen wird.

Auf diese Weise ließen sich in einem einzigen Rundgang alle Zahnlücken auf das Sollmaß (bzw. Zwischenmaß) schleifen, wodurch gegenüber den aus dem Stand der Technik bekannten Verfahren vorteilhaft Arbeitszeit eingespart wird.

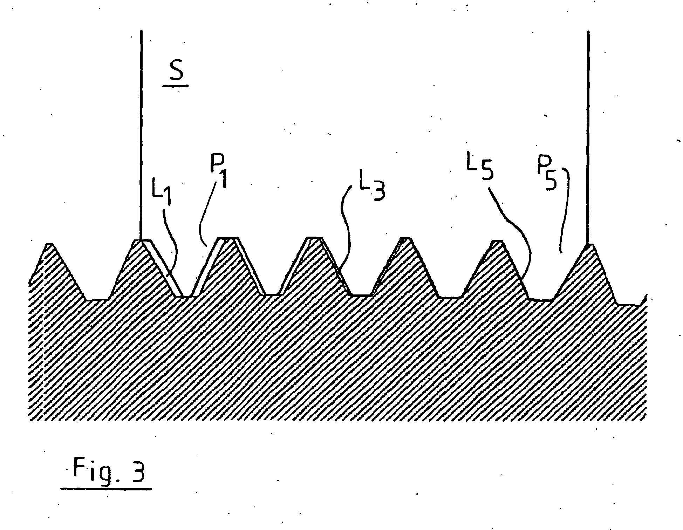

Während in der vorhergehenden Variante die einzelnen Profilabschnitte bei ihrem Eingriff in das Zahnrad unterschiedliche radiale Abstände zur Zahnradachse A_{z} aufwiesen, gilt dies für den Schleifkörper gemäß Fig. 3 nicht. Dort haben alle Profilabschnitte P₁ bis P₅ bei eingriff in das Zahnrad Z im Wesentlichen den gleichen radialen Abstand zur Zahnradachse A_{z}. Dagegen nimmt die Breite der Profilabschnitte, also ihre Ausdehnung in Umfangsrichtung des Zahnrades, beginnend beim Profilabschnitt P₁ schrittweise zu. Entsprechend wird hier bei jedem Hub und vorausgehender Weiterteilung um eine Zahnlücke weiteres Material in Umfangsrichtung abgetragen (also die Lücke "breiter"), während der Fußkreisdurchmesser der Zahnlücken weitgehend konstant bleibt. Die einzelnen Bearbeitungsschritte erfolgen analog den Ausführungen zur Fig. 2, so dass auch hier alle Zahnlücken in einem einzigen Rundgang fertig geschliffen werden könnten.

Fig. 4 stellt einen erfindungsgemäßen Sonderfall des Verfahrens dar. Zu sehen ist dort, dass einzelne Profilabschnitte P₁, P₂ bzw. P₃, P₄... jeweils zu Zweiergruppen zusammengefasst sind. Die Profilabschnitte einer Gruppe sind dabei gleichartig gewählt, so dass beispielsweise die Profilabschnitte P₁ und P₂ jeweils gleich weit in die Zahnlücken hineinreichen. Die Profilabschnitte P₃ und P₄ der benachbarten Gruppe dagegen greifen tiefer in die beiden von ihnen bearbeiteten Zahnlücken ein und nehmen zusätzliches Material weg. Im Vergleich zur Fig. 2 und den zugehörigen Erläuterungen wird deutlich, dass hier die Anzahl der Profilabschnitte erhöht wurde mit dem Ziel, jeweils zwei Zahnlücken mit gleichartigem Profil zu versehen, um dann durch Weiterteilung um zwei Zahnlücken das nächst größere Bearbeitungsprofil in die Lücken eingreifen zu lassen. Zwar verlangt der Schleifkörper für diese Variante mehr Profilabschnitte, allerdings kann durch die Weiterteilung um jeweils zwei Zahnlücken zwischen den einzelnen Hüben die Bearbeitung insgesamt weiter beschleunigt werden.

## Patentansprüche

1. Verfahren zur Bearbeitung eines um eine Zahnradachse (A_{z}) ausgebildeten Zahnrades (Z) mit einem um eine Schleifachse (Aₛ) rotierenden Schleifkörper (S),
a) wobei der Schleifkörper (S) Zahnlücken (L) des Zahnrades (Z) schleifend bearbeitet, indem er in mehreren Bearbeitungshüben (H₁, H₂, H₃... ) über die Breite des Zahnrades (Z) an diesem entlangbewegt wird, und
b) wobei der Schleifkörper zur gleichzeitigen Bearbeitung von wenigstens zwei Lücken (L₁, L₂, L₃... Lₙ) ein Bearbeitungsprofil mit wenigstens zwei Profilabschnitten (P₁, P₂, P₃... Pₘₐₓ) aufweist, so dass die einzelnen Profilabschnitte (P₁,...Pₘₐₓ) des Schleifkörpers (S) dabei in unterschiedliche Zahnlücken (L) des Zahnrades (Z) eingreifen,
c) wobei das Profil wenigstens zweier Profilabschnitte (P₁, P₂, P₃... Pₘₐₓ) voneinander abweicht, um wenigstens zwei in einem gemeinsamen Bearbeitungshub bearbeitete Lücken (L₁, L₂, L₃... Lₙ) entsprechend dieser Abweichung mit unterschiedlichem Abtrag bzw. Zerspanvolumen, aber gleichzeitig, zu schleifen,
**dadurch gekennzeichnet,**
d) **dass** wenigstens zwei Profilabschnitte (P₁, P₂, P₃... Pₘₐₓ) so geformt werden, dass sie während eines Hubes den gesamten Abschnitt der beiden Flanken einer Zahnlücke (L) schleifend bearbeiten, der zwischen dem zugehörigen Außendurchmesser des Profilabschnitts (P₁, P₂, P₃... Pₘₐₓ) und dem geplanten Kopfkreisdurchmesser (bei Außenverzahnung) bzw. Fußkreisdurchmesser (bei Innenverzahnung) des Zahnrades liegt.

2. Verfahren nach Anspruch 1, **dadurch gekennzeichnet, dass**
a) in wenigstens einem Bearbeitungshub (H₁) eine Zahnlücke (L₁) entsprechend eines Profilabschnittes (P₁) geschliffen wird und das Zahnrad anschließend so gedreht wird.
b) dass die Zahnlücke (L₁) in einem vorzugsweise unmittelbar anschließenden Bearbeitungshub (H₂) mit einem Profilabschnitt (P₂) abtragend bearbeitet wird, dessen Profil sich von demjenigen Profilabschnitt (P₁) unterscheidet, mit dem die Lücke (L₁) im vorausgehenden Bearbeitungshub (H₁) bearbeitet wurde.

3. Verfahren nach Anspruch 2, **dadurch gekennzeichnet, dass**
a) in einem Bearbeitungshub (H₁) die Zahnlücken (L₁, L₂, L₃... Lₙ) entsprechend der Profilabschnitte (P₁, P₂, P₃... Pₘₐₓ) gleichzeitig geschliffen werden und das Zahnrad anschließend so gedreht wird,
b) dass ein Teil der Zahnlücken (L₁, L₂, L₃... Lₙ) im nächsten Bearbeitungshub (H₂) entsprechend der Profilabschnitte (P₂, P₃, P₄... Pₘₐₓ) abtragend bearbeitet wird, wobei sich die Profile von wenigstens zwei der Profilabschnitte (P₁, P₂, P₃, P₄... Pₘₐₓ) voneinander unterscheiden.

4. Verfahren nach einem der vorigen Ansprüche, **dadurch gekennzeichnet, dass** bei jedem Bearbeitungshub (H₁, H₂) aus jeder dabei bearbeiteten Zahnlücke (L₁) weiteres Material abgetragen wird.

5. Verfahren nach einem der vorigen Ansprüche, **dadurch gekennzeichnet, dass** der Abstand zwischen Schleifachse (Aₛ) und Zahnradachse (A_{z}) zwischen wenigstens zwei unmittelbar aufeinanderfolgenden Bearbeitungshüben (H₁, H₂) konstant gehalten wird.

6. Verfahren nach einem der vorigen Ansprüche, **dadurch gekennzeichnet, dass** die einzelnen Profile der Profilabschnitte (P₁, P₂, P₃...Pₙ.... Pₘₐₓ) in einer Richtung parallel zur Schleifachse (Aₛ) so hintereinander angeordnet werden, dass ein nachfolgendes Profil (Pₙ) Material aus einem Bereich der Zahnlücke abträgt, den ein vorausgehendes Profil (Pᵢ) mit i < n nicht erreicht.

7. Verfahren nach einem der vorigen Ansprüche, **dadurch gekennzeichnet, dass** wenigstens zwei Profilabschnitte (P₁, P₂, P₃... Pₙ) gleichartig profiliert sind.

8. Verfahren nach dem vorhergehenden Anspruch, **dadurch gekennzeichnet, dass** die gleichartigen Profilabschnitte (P₁, P₂, P₃... Pₙ) unmittelbar benachbart sind.

9. Verfahren nach dem vorhergehenden Anspruch, **dadurch gekennzeichnet, dass** das Zahnrad (Z) zwischen den Bearbeitungshüben um wenigstens so viele Lücken weitergedreht wird, wie unmittelbar benachbarte Profilabschnitte (P₁, P₂, P₃... Pₙ) mit gleichartigem Profil am Schleifkörper (S) vorgesehen sind.

10. Verfahren nach einem der vorigen Ansprüche, **dadurch gekennzeichnet, dass** der Profilabschnitt (Pₘₐₓ) die Zahnlücke (L) auf ihr Sollmaß oder ein definiertes Zwischenmaß schleift.

11. Verfahren nach einem der vorigen Ansprüche, **dadurch gekennzeichnet, dass** der Schleifkörper (S) vor der Bearbeitung aus einzelnen Schleifscheiben zu einem Paket zusammengesetzt wird.

12. Verfahren nach einem der vorigen Ansprüche, **dadurch gekennzeichnet, dass** unterschiedliche Profilabschnitte (P₁, P₂, P₃... Pₘₐₓ) unterschiedliche maximale Radien zur Schleifachse (Aₛ) aufweisen.

13. Verfahren nach einem der vorigen Ansprüche, **dadurch gekennzeichnet, dass** wenigstens zwei unterschiedliche Profilabschnitte (P₁, P₂, P₃... Pₘₐₓ) bei einem Hub gleich tief in das Zahnrad eingreifen, jedoch zur Erzielung unterschiedlicher Lückenbreiten in Umfangsrichtung des Zahnrades verschieden breit ausgebildet sind.

14. Verfahren nach einem der vorigen Ansprüche, **dadurch gekennzeichnet, dass** der Schleifkörper für die Schleifbearbeitung der Lücken so angeordnet wird, dass die Mitte des Zahnrades Z in einer zur Schleifkörperachse (Aₛ) lotrechten Rotationsebene liegt, welche den Profilabschnitt (Pₘₐₓ) - vorzugsweise symmetrisch - teilt.

## Claims

1. Method for processing a cogwheel (Z) formed about a cogwheel axis (A_{z}) with a grinding body (S) rotating about a grinding axis (Aₛ),
a) wherein the grinding body (S) processes in a grinding manner tooth gaps (L) of the cogwheel (Z) by being moved along on the cogwheel (Z) over the width thereof in a plurality of processing strokes (H₁, H₂, H₃...), and
b) wherein the grinding body has for the simultaneous processing of at least two gaps (L₁, L₂, L₃... Lₙ) a processing profile that has at least two profiled sections (P₁, P₂, P₃... Pₘₐₓ) so that the individual profiled sections (P₁, ...Pₘₐₓ) of the grinding body (S) then engage in different tooth gaps (L) of the cogwheel (Z),
c) wherein the profiles of at least two profiled sections (P₁, P₂, P₃ ... Pₘₐₓ) deviate from each other in order to grind at least two gaps (L₁, L₂, L₃... Lₙ), processed in a common processing stroke, in accordance with this deviation with a differing volume of material being removed or cut, but at the same time,
**characterised in that**
d) at least two profiled sections (P₁, P₂, P₃ ... Pₘₐₓ) are shaped in such a way that during one stroke they process by grinding the whole section of the two flanks of a tooth gap (L) that lies between the associated outside diameter of the profiled section (P₁, P₂, P₃... Pₘₐₓ) and the planned tip diameter (in the case of external toothing) or root diameter (in the case of internal toothing) of the cogwheel.

2. Method according to claim 1, **characterised in that**
a) in at least one processing stroke (H₁) a tooth gap (L₁) is ground in accordance with a profiled section (P₁), and the cogwheel is subsequently turned in such a way
b) that the tooth gap (L₁) is processed in a material-removing manner, in a processing stroke (H₂) which preferably follows immediately, with a profiled section (P₂) whose profile differs from that profiled section (P₁) with which the gap (L₁) was processed in the preceding processing stroke (H₁) .

3. Method according to claim 2, **characterised in that**
a) in one processing stroke (H₁) the tooth gaps (L₁, L₂, L₃... Lₙ) are ground simultaneously in accordance with the profiled sections (P₁, P₂, P₃... Pₘₐₓ), and the cogwheel is subsequently turned in such a way
b) that a portion of the tooth gaps (L₁, L₂, L₃... Lₙ) is processed in a material-removing manner in the next processing stroke (H₂) in accordance with the profiled sections (P₂, P₃, P₄... Pₘₐₓ), wherein the profiles of at least two of the profiled sections (P₁, P₂, P₃, P₄... Pₘₐₓ) differ from each other.

4. Method according to one of the previous claims, **characterised in that** with each processing stroke (H₁, H₂) further material is removed from each tooth gap (L₁) thereby processed.

5. Method according to one of the previous claims, **characterised in that** the distance between the grinding axis (Aₛ) and the cogwheel axis (A_{z}) is kept constant between at least two processing strokes (H₁, H₂) immediately following one another.

6. Method according to one of the previous claims, **characterised in that** the individual profiles of the profiled sections (P₁, P₂, P₃... Pₙ... Pₘₐₓ) are arranged one after the other in a direction parallel to the grinding axis (Aₛ) in such a way that a following profile (Pₙ) removes material from a region of the tooth gap which a preceding profile (Pᵢ) with i < n does not reach.

7. Method according to one of the previous claims, **characterised in that** at least two profiled sections (P₁, P₂, P₃... Pₙ) are profiled similarly.

8. Method according to the preceding claim, **characterised in that** the similar profiled sections (P₁, P₂, P₃... Pₙ) are directly adjacent.

9. Method according to the preceding claim, **characterised in that** the cogwheel (Z) is turned further between the processing strokes by at least as many gaps as directly adjacent profiled sections (P₁, P₂, P₃... Pₙ) with a similar profile are provided on the grinding body (S).

10. Method according to one of the previous claims, **characterised in that** the profiled section (Pₘₐₓ) grinds the tooth gap (L) to its desired dimension or a defined intermediate dimension.

11. Method according to one of the previous claims, **characterised in that** the grinding body (S) before processing is made up out of individual grinding discs to form a stack.

12. Method according to one of the previous claims, **characterised in that** different profiled sections (P₁, P₂, P₃... Pₘₐₓ) have different maximum radii to the grinding axis (Aₛ).

13. Method according to one of the previous claims, **characterised in that** at least two different profiled sections (P₁, P₂, P₃... Pₘₐₓ) during one stroke engage to the same depth into the cogwheel, yet in order to attain different gap widths are formed with varying width in the circumferential direction of the cogwheel.

14. Method according to one of the previous claims, **characterised in that** the grinding body for the grinding processing of the gaps is arranged in such a way that the centre of the cogwheel Z lies in a rotational plane that is perpendicular to the grinding-body axis (Aₛ) and divides the profiled section (Pₘₐₓ) - preferably symmetrically.

## Revendications

1. Procédé d'usinage d'une roue dentée (Z) formée autour d'un axe de roue dentée (A_{z}) avec un corps de meulage (S) en rotation autour d'un axe de meulage (As),
a) dans lequel le corps de meulage (S) usine, par meulage, des entredents (L) de la roue dentée (Z) du fait qu'il est déplacé dans plusieurs courses d'usinage (H₁, H₂, H₃,...) sur la largeur de la roue dentée (Z) et le long de celle-ci, et
b) dans lequel le corps de meulage présente, pour l'usinage simultané d'au moins deux entredents (L₁, L₂, L₃, ..., Lₙ), un profil d'usinage avec au moins deux sections de profil (P₁, P₂, P₃, ..., Pₘₐₓ) de sorte que les sections de profil individuelles (P₁, ..., Pₘₐₓ) du corps de meulage (S) s'engagent en l'occurrence dans différents entredents (L) de la roue dentée (Z),
c) dans lequel les profils d'au moins deux sections de profil (P₁, P₂, P₃, ..., Pₘₐₓ) s'écartent l'un de l'autre pour meuler en fonction de cet écart au moins deux entredents (L₁, L₂, L₃, ..., Lₙ) usinés dans une course d'usinage commune, avec un enlèvement ou un volume de copeaux différent mais simultané
**caractérisé en ce que**
d) au moins deux sections de profil (P₁, P₂, P₃, ..., Pₘₐₓ) sont formées de sorte que pendant une course, elles usinent par meulage l'ensemble de la section des deux flancs d'un entredent (L), laquelle se situe entre le diamètre extérieur correspondant de la section de profil (P₁, P₂, P₃, ..., Pₘₐₓ) et le diamètre du cercle de tête prévu (dans le cas d'une denture externe) ou le diamètre du cercle de pied prévu (dans le cas d'une denture interne) de la roue dentée.

2. Procédé selon la revendication 1, **caractérisé en ce que**
a) dans au moins une course d'usinage (H₁), un entredent (L₁) est meulé selon une section de profil (P₁) et la roue dentée est ensuite soumise à une rotation de sorte que
b) l'entredent (L₁) est usiné avec une section de profil (P₂) et par enlèvement, dans une course d'usinage (H₂) de préférence immédiatement consécutive, lequel profil diffère de la section de profil (P₁) avec laquelle l'entredent (L₁) avait été usiné dans la course d'usinage précédente (H₁).

3. Procédé selon la revendication 2, **caractérisé en ce que**
a) dans une course d'usinage (H₁), les entredents (L₁, L₂, L₃, ..., Lₙ) sont meulés simultanément en fonction des sections de profil (P₁, P₂, P₃, ..., Pₘₐₓ) et la roue dentée est ensuite soumise à une rotation de sorte que
b) une partie des entredents (L₁, L₂, L₃, ..., Lₙ) est usinée par enlèvement dans la course d'usinage suivante (H₂) en fonction des sections de profil (P₂, P₃, P₄, ..., Pₘₐₓ), les profils d'au moins deux des sections de profil (P₁, P₂, P₃, P₄, ..., Pₘₐₓ) différant l'un de l'autre.

4. Procédé selon l'une quelconque des revendications précédentes, **caractérisé en ce que**, à chaque course d'usinage (H₁, H₂), du matériau supplémentaire est enlevé de chaque entredent (L₁) usiné en l'occurrence.

5. Procédé selon l'une quelconque des revendications précédentes, **caractérisé en ce que** la distance entre l'axe de meulage (A_{S}) et l'axe de roue dentée (A_{Z}) est maintenu constant entre au moins deux courses d'usinage (H₁, H₂) immédiatement consécutives.

6. Procédé selon l'une quelconque des revendications précédentes, **caractérisé en ce que** les profils individuels des sections de profil (P₁, P₂, P₃, ..., Pₙ, ..., Pₘₐₓ) sont agencés l'un derrière l'autre dans une direction parallèle à l'axe de meulage (A_{S}) de sorte qu'un profil suivant (Pₙ) enlève du matériau d'une zone de l'entredent qu'un profil précédent (Pi) avec i < n n'atteint pas.

7. Procédé selon l'une quelconque des revendications précédentes, **caractérisé en ce qu'**au moins deux sections de profil (P₁, P₂, P₃, ..., Pₙ) sont profilées de la même manière.

8. Procédé selon la revendication précédente, **caractérisé en ce que** les sections de profil similaires (P₁, P₂, P₃, ..., Pₙ) sont directement adjacentes.

9. Procédé selon la revendication précédente, **caractérisé en ce que**, entre les courses d'usinage, la roue dentée (Z) est soumise à au moins autant de rotations d'entredents qu'il y a de sections de profil (P₁, P₂, P₃, ..., Pₙ) avec un profil similaire immédiatement adjacentes prévues sur le corps de meulage (S).

10. Procédé selon l'une quelconque des revendications précédentes, **caractérisé en ce que** la section de profil (Pₘₐₓ) meule l'entredent (L) à sa dimension théorique ou à une dimension intermédiaire définie.

11. Procédé selon l'une quelconque des revendications précédentes, **caractérisé en ce que**, avant l'usinage, le corps de meulage (S) est assemblé à partir de meules individuelles pour former un paquet.

12. Procédé selon l'une quelconque des revendications précédentes, **caractérisé en ce que** des sections de profil (P₁, P₂, P₃, ..., Pₘₐₓ) différentes présentent des rayons maximaux différents par rapport à l'axe de meulage (As).

13. Procédé selon l'une quelconque des revendications précédentes, **caractérisé en ce que**, lors d'une même course, au moins deux sections de profil (P₁, P₂, P₃,..., Pₘₐₓ) différentes s'engagent à une profondeur identique dans la roue dentée, mais sont formées de largeurs différentes dans le but d'obtenir des largeurs d'entredents différentes dans la direction circonférentielle de la roue dentée.

14. Procédé selon l'une quelconque des revendications précédentes, **caractérisé en ce que** le corps de meulage est ainsi agencé pour l'usinage par meulage des entredents que le centre de la roue dentée Z se situe dans un plan de rotation perpendiculaire à l'axe de corps de meulage (A_{S}), lequel plan divise -de préférence symétriquement- la section de profil (Pₘₐₓ).
